# FASCICULE DE BREVET EUROPEEN

(11) **EP 3 433 471 B1**
(45) Date de publication et mention de la délivrance du brevet: **29.01.2020**
(21) Numéro de dépôt: 17716953.9
(22) Date de dépôt: 20.03.2017
(51) Int. Cl.: F01D 25/24

(54) **ENSEMBLE D'ANNEAU DE TURBINE AVEC MAINTIEN SPÉCIFIQUE À FROID**
TURBINENDECKBANDANORDNUNG MIT SPEZIFISCHER AUFHÄNGUNG IM KALTEN ZUSTAND
TURBINE SHROUD SEAL ASSEMBLY WITH SPECIFIC SUPPORT IN COLD CONDITIONS

(30) Priorité: 21.03.2016 FR 1652392
(43) Date de publication de la demande: 30.01.2019
(73) Titulaire: Safran Ceramics, 33185 Le Haillan (FR); Safran Aircraft Engines, 75015 Paris (FR)
(72) Inventeur: LEPRETRE, Gilles, 33160 SAINT AUBIN DE MEDOC (FR); TESSON, Thierry, 33000 BORDEAUX (FR); LYPRENDI, Adèle, 81000 ALBI (FR); REVEL, Thomas, 33200 BORDEAUX (FR)
(74) Mandataire: Cabinet Beau de Loménie
(86) Numéro de dépôt international: PCT/FR2017/050639
(87) Numéro de publication internationale: WO 2017/162967

(56) Documents cités:
- WO-A1-2015/191186
- US-A- 4 127 357
- US-A1- 2008 178 465
- US-A1- 2014 308 116

## Description

### Arrière-plan de l'invention

Le domaine d'application de l'invention est notamment celui des moteurs aéronautiques à turbine à gaz. L'invention est toutefois applicable à d'autres turbomachines, par exemple des turbines industrielles.

Les matériaux composites à matrice céramique, ou CMC, sont connus pour conserver leurs propriétés mécaniques à des températures élevées, ce qui les rend aptes à constituer des éléments de structure chaude.

Dans des moteurs aéronautiques à turbine à gaz, l'amélioration du rendement et la réduction de certaines émissions polluantes conduisent à rechercher un fonctionnement à des températures toujours plus élevées. Dans le cas d'ensembles d'anneau de turbine entièrement métalliques, il est nécessaire de refroidir tous les éléments de l'ensemble et en particulier l'anneau de turbine qui est soumis à des flux très chauds, typiquement supérieurs à la température supportable par le matériau métallique. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Par ailleurs, un ensemble d'anneau de turbine métallique se déforme sous l'effet des flux thermiques, ce qui modifie les jeux au niveau de la veine d'écoulement et, par conséquent, les performances de la turbine.

C'est pourquoi l'utilisation de CMC pour différentes parties chaudes des moteurs a déjà été envisagée, d'autant que les CMC présentent comme avantage complémentaire une masse volumique inférieure à celle de métaux réfractaires traditionnellement utilisés.

Ainsi, la réalisation de secteurs d'anneau de turbine en une seule pièce en CMC est notamment décrite dans le document US 2012/0027572. Les secteurs d'anneau comportent une base annulaire dont la face interne définit la face interne de l'anneau de turbine et une face externe à partir de laquelle s'étendent deux parties formant pattes dont les extrémités sont engagées dans des logements d'une structure métallique de support d'anneau.

L'utilisation de secteurs d'anneau en CMC permet de réduire significativement la ventilation nécessaire au refroidissement de l'anneau de turbine. Toutefois, le maintien en position des secteurs d'anneau demeure un problème en particulier vis-à-vis des dilatations différentielles qui peuvent se produire entre la structure métallique de support et les secteurs d'anneau en CMC. C'est pourquoi il est nécessaire de prévoir un jeu minimum entre les pièces assemblées. Or, un tel jeu ne permet pas un bon contrôle de la forme de la veine ni un bon comportement des secteurs d'anneau en cas de touche avec le sommet des aubes de la turbine. En outre, le présence d'un tel jeu entraîne des problème vibratoires.

Une solution pour un maintien en position de secteurs d'anneau est notamment décrite dans le document WO 2015/191186. Ce document divulgue divers modes de réalisation de secteurs d'anneau en CMC. Dans un de ces modes de réalisation, le secteur d'anneau comprend deux pattes maintenues entre les brides d'une structure de support d'anneau, chacune des pattes ayant deux ouvertures dont l'une est oblongue dans la direction circonférentielle de l'anneau de turbine.

### Objet et résumé de l'invention

L'invention vise à éviter de tels inconvénients et propose à cet effet un ensemble d'anneau de turbine comprenant une pluralité de secteurs d'anneau en matériau composite à matrice céramique formant un anneau de turbine et une structure de support d'anneau comportant une première et une deuxième brides annulaires, chaque secteur d'anneau ayant une partie formant base annulaire avec, dans une direction radiale de l'anneau de turbine, une face interne définissant la face interne de l'anneau de turbine et une face externe à partir de laquelle s'étendent une première et une deuxième pattes, les pattes de chaque secteur d'anneau étant maintenues entre les deux brides annulaires de la structure de support d'anneau. La première patte de chaque secteur d'anneau comporte une première et une deuxième ouvertures dans lesquelles sont logées une partie respectivement d'un premier et d'un deuxième éléments de maintien solidaires de la première bride annulaire, un jeu radial étant présent à froid entre les première et deuxième ouvertures de la première patte et la partie des éléments de maintien présente dans lesdites première et deuxième ouvertures. Les éléments de maintien sont en un matériau ayant un coefficient de dilatation thermique supérieur au coefficient de dilatation thermique du matériau composite à matrice céramique des secteurs d'anneau, la première ouverture présentant une forme oblongue s'étendant dans la direction circonférentielle de l'anneau de turbine. La deuxième patte de chaque secteur d'anneau comporte une première et une deuxième ouvertures dans lesquelles sont logées une partie respectivement d'un troisième et d'un quatrième éléments de maintien solidaires de la deuxième bride annulaire, un jeu radial étant présent à froid entre les première et deuxième ouvertures de la deuxième patte et la partie des éléments de maintien présente dans lesdites première et deuxième ouvertures. Les éléments de maintien sont en un matériau ayant un coefficient de dilatation thermique supérieur au coefficient de dilatation thermique du matériau composite à matrice céramique des secteurs d'anneau, la première ouverture présentant une forme oblongue s'étendant dans la direction circonférentielle de l'anneau de turbine, les première et deuxième ouvertures de la première patte étant alignées axialement avec les première et deuxième ouvertures de la deuxième patte. La première bride annulaire comprend sur sa face en regard de la première patte de chaque secteur d'anneau une pluralité de portions d'appui réparties de manière circonférentielle sur la première bride, l'extrémité de la première patte de chaque secteur d'anneau étant à froid en butée radiale avec deux portions d'appui. La deuxième bride annulaire comprend sur sa face en regard de la deuxième patte de chaque secteur d'anneau une pluralité de portions d'appui réparties de manière circonférentielle sur la deuxième bride, l'extrémité de la deuxième patte de chaque secteur d'anneau étant à froid en butée radiale avec deux portions d'appui.

Grâce à la pluralité de portions d'appui présentes sur les brides annulaires de la structure de support d'anneau, il est possible de maintenir les secteurs d'anneau sans jeu au niveau de leur montage à froid sur la structure de support d'anneau, les secteurs d'anneau étant maintenus, d'une part, par le contact entre les éléments de maintien solidaires des brides annulaires de la structure de support d'anneau et les ouvertures présentes dans les pattes des secteurs d'anneau et, d'autre part, par le contact entre les portions d'appui présentes sur les brides annulaires de la structure de support d'anneau et les pattes des secteurs d'anneau. L'ensemble d'anneau de turbine de l'invention est en outre remarquable en ce qu'il permet cependant de ménager un jeu statique à froid entre les éléments de maintien solidaires des brides annulaires de la structure de support d'anneau et les ouvertures présentes dans les pattes des secteurs d'anneau au niveau d'une zone des éléments de maintien différente de celle en contact avec les ouvertures. Il est ainsi possible de reprendre la perte de maintien à chaud des portions d'appui due à la dilatation de la structure de support d'anneau par la dilatation des éléments de maintien dans les ouvertures des pattes des secteurs d'anneau qui réduisent le jeu statique présent à froid.

Selon une caractéristique particulière de l'ensemble d'anneau de turbine de l'invention, les premier et deuxième éléments de maintien sont formés respectivement par des premier et deuxième pions solidaires de la première bride annulaire et en ce que les troisième et quatrième éléments de maintien sont formés respectivement par des troisième et quatrième pions solidaires de la deuxième bride annulaire.

Selon un premier aspect particulier de l'ensemble d'anneau de turbine de l'invention, les portions d'appui présentes sur les première et deuxième brides annulaires sont espacées les unes des autres par une portion évidée s'étendant dans une direction circonférentielle. Cet évidement permet de faciliter les montage des secteurs d'anneau sur la structure de support d'anneau.

Selon un deuxième aspect particulier de l'ensemble d'anneau de turbine de l'invention, celui-ci comprend une pluralité d'éléments de bridage réglables à excentrique, chaque élément de bridage comprenant une bride fixée de manière excentrée sur l'élément de bridage, chaque bride formant une portion d'appui présente sur les première et deuxième brides annulaires. Grâce à l'utilisation des éléments de bridage à excentriques, il est possible de régler les appuis à froid entre les secteurs d'anneau et la structure de support d'anneau.

Selon un troisième aspect particulier de l'ensemble d'anneau de turbine de l'invention, la première patte de chaque secteur d'anneau comprend deux surfaces d'appui en contact respectivement avec deux portions d'appui de la première bride annulaire, les deux surfaces d'appui s'étendant suivant un même premier plan d'appui, le bord supérieur de la première ouverture de forme oblongue étant aligné avec le premier plan d'appui, la partie supérieure de la deuxième ouverture étant tangente audit premier plan d'appui. De même, la deuxième patte de chaque secteur d'anneau comprend deux surfaces d'appui en contact respectivement avec deux portions d'appui de la deuxième bride annulaire, les deux surfaces d'appui s'étendant suivant un même deuxième plan d'appui, le bord supérieur de la première ouverture de forme oblongue étant aligné avec le deuxième plan d'appui, la partie supérieure de la deuxième ouverture étant tangente audit deuxième plan d'appui. Cet alignement des zones de contact sur un plan d'appui permet d'éviter tout mouvement relatif lié aux écarts de coefficient de dilatation thermique dans le sens radial et de conserver les mêmes zones de contact aussi bien à froid qu'à chaud.

Selon un quatrième aspect particulier de l'ensemble d'anneau de turbine de l'invention, la deuxième ouverture de la première patte de chaque secteur d'anneau présente une forme oblongue, le bord supérieur de la deuxième ouverture de forme oblongue étant aligné avec le premier plan d'appui, et dans lequel la deuxième ouverture de la deuxième patte de chaque secteur d'anneau présente une forme oblongue, le bord supérieur de la deuxième ouverture de forme oblongue étant aligné avec le deuxième plan d'appui, l'extrémité de la première patte de chaque secteur d'anneau comprenant un évidement situé entre les deux surfaces d'appui et dans lequel est logé un élément de centrage solidaire de la première bride annulaire, l'extrémité de la deuxième patte de chaque secteur d'anneau comprenant un évidement situé entre les deux surfaces d'appui et dans lequel est logé un élément de centrage solidaire de la deuxième bride annulaire. En utilisant deux ouvertures de forme oblongue dans chaque patte des secteurs d'anneau, on symétrise le déplacement relatif entre la structure de support d'anneau et les secteurs d'anneau. On conserve ainsi une bonne coïncidence entre l'axe médian de chaque secteur d'anneau et le rayon équivalent sur la structure de support d'anneau. L'élément de centrage permet d'éviter un décentrage des secteurs d'anneau lors des dilatations thermiques.

Selon un cinquième aspect particulier de l'ensemble d'anneau de turbine de l'invention, les premier et deuxième éléments de maintien solidaires de la première bride radiale et les troisième et quatrième éléments de maintien solidaires de la deuxième bride radiale sont chacun formés par un élément de bridage réglable à excentrique. En utilisant des éléments de bridage à excentrique pour chaque élément de maintien, on augmente encore la capacité de réglage en hauteur radiale des secteurs d'anneau par rapport à la structure de support d'anneau et, par conséquent, le réglage du jeu entre les secteurs d'anneau.

### Brève description des dessins.

L'invention sera mieux comprise à la lecture faite ci-après, à titre indicatif mais non limitatif, en référence aux dessins annexés sur lesquels :
- la figure 1 est une première vue schématique en perspective d'un mode de réalisation d'un ensemble d'anneau de turbine selon l'invention ;
- la figure 2 est une deuxième vue schématique en perspective de l'ensemble d'anneau de turbine de la figure 1 ;
- la figure 3 est une vue en coupe de l'ensemble de l'anneau de turbine de la figure 1 selon le plan de coupe III indiqué sur la figure 1 ;
- la figure 4 est une vue en coupe de l'ensemble de l'anneau de turbine de la figure 2 selon le plan de coupe VI indiqué sur la figure 2 ;
- la figure 5 montre schématiquement le montage d'un secteur d'anneau dans la structure de support d'anneau de l'ensemble d'anneau des figures 1 à 4 ;
- la figure 6 est une première vue schématique en perspective d'un autre mode de réalisation d'un ensemble d'anneau de turbine selon l'invention ;
- la figure 7 est une deuxième vue schématique en perspective de l'ensemble d'anneau de turbine de la figure 6 ;
- la figure 8 est une vue en coupe de l'ensemble de l'anneau de turbine de la figure 7 selon le plan de coupe VIII indiqué sur la figure 7 ;
- la figure 9 est une vue en coupe d'un secteur d'anneau de l'ensemble de l'anneau de turbine des figures 6 et 7 ;
- la figure 10 est une première vue schématique en perspective d'un autre mode de réalisation d'un ensemble d'anneau de turbine selon l'invention ;
- la figure 11 est une deuxième vue schématique en perspective de l'ensemble d'anneau de turbine de la figure 10 ;
- la figure 12 est un vue schématique en perspective d'un secteur d'anneau de l'ensemble de turbine des figures 10 et 11 ;
- la figure 13 est une vue en coupe de l'ensemble de l'anneau de turbine de la figure 11 selon le plan de coupe XIII indiqué sur la figure 11 ;
- la figure 14 est une vue en coupe d'un secteur d'anneau de l'ensemble de l'anneau de turbine des figures 10 et 11.

### Description détaillée de modes de réalisation

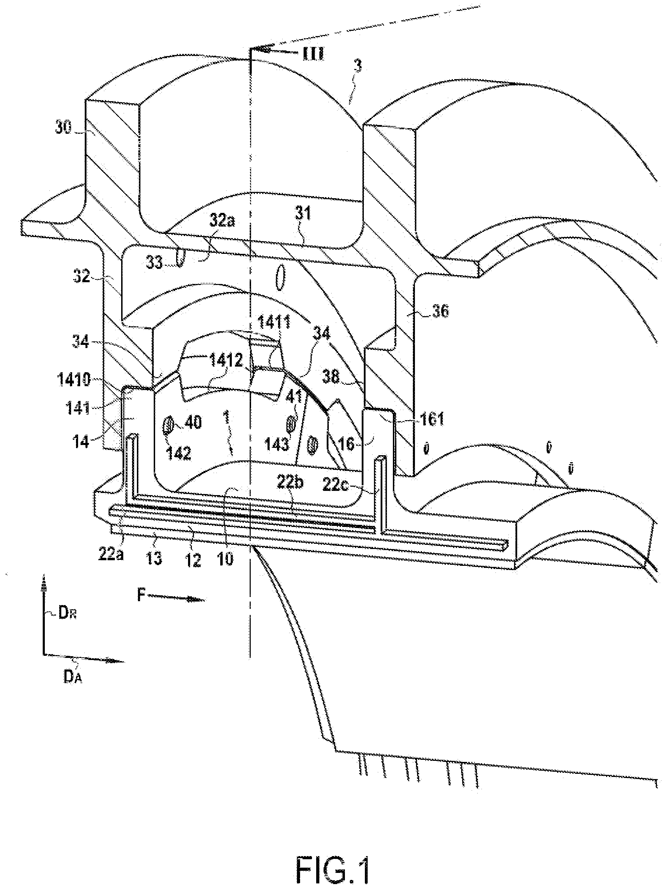

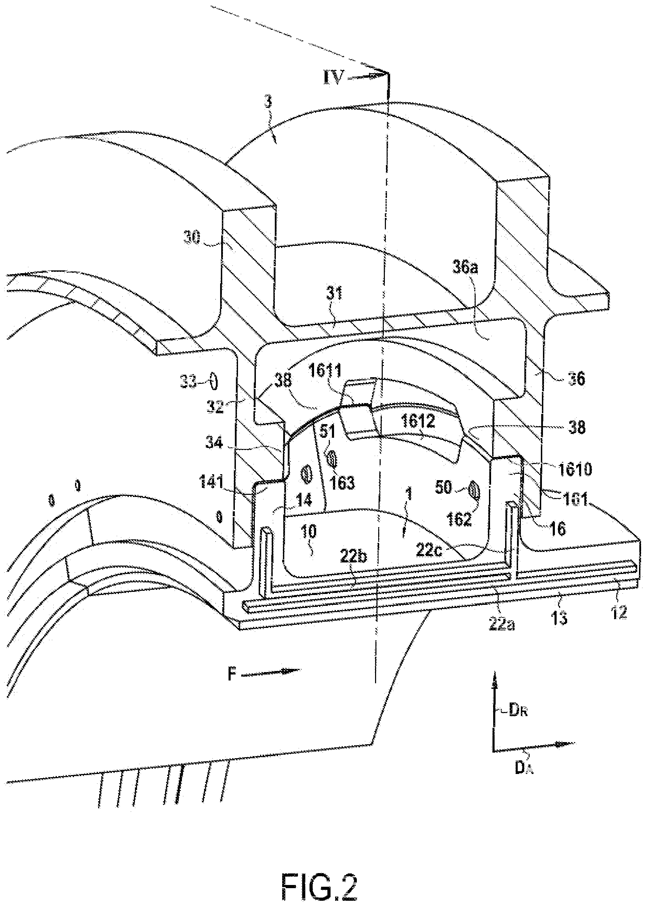

Les figures 1 et 2 montrent un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, les figures 1 et 2 étant des vues en section radiale. La flèche DA indique la direction axiale de l'anneau de turbine 1 tandis que la flèche DR indique la direction radiale de l'anneau de turbine 1.

Chaque secteur d'anneau 10 présente, selon un plan défini par les directions axiale DA et radiale DR une section sensiblement en forme de Pi ou π inversé. Chaque secteur d'anneau 10 comprend une base annulaire 12 avec, suivant la direction radiale D_{R} de l'anneau, une face interne revêtue d'une couche 13 de matériau abradable définissant la veine d'écoulement de flux gazeux dans la turbine. Des pattes amont et aval 14, 16 s'étendent à partir de la face externe de la base annulaire 12 dans la direction radiale DR. Les termes "amont" et "aval" sont utilisés ici en référence au sens d'écoulement du flux gazeux dans la turbine (flèche F).

La structure de support d'anneau 3 qui est solidaire d'un carter de turbine 30 comprend une bride radiale amont annulaire 32 comportant sur sa face 32a en regard de la patte amont 14 des secteurs d'anneau 10 une pluralité de portions d'appui 34 réparties de manière circonférentielle sur la bride. Plus précisément, chaque portion d'appui 34 s'étend suivant la direction axiale DA en saillie depuis la face 32a de la bride radiale amont annulaire 32 en regard de la patte amont 14 des secteurs d'anneau 10. L'extrémité 141 de la patte amont 14 de chaque secteur d'anneau 10 est en contact à froid avec deux portions d'appui 34 de la bride radiale amont annulaire 32. Plus précisément, la surface supérieure de l'extrémité 141 dans la direction radiale DR est en contact à froid avec la surface inférieure des portions d'appui 34 dans la direction radiale DR réalisant ainsi une butée radiale entre l'extrémité 141 et les portions d'appui 34.

Par « à froid », on entend dans la présente invention, la température à laquelle se trouve l'ensemble d'anneau lorsque la turbine ne fonctionne pas, c'est-à-dire à une température ambiante qui peut être par exemple d'environ 25°C. Dans l'exemple décrit ici l'extrémité 141 de chaque patte 14 comporte une première et une deuxième surfaces d'appui 1410 et 1411 respectivement en contact avec deux portions d'appui 34. Une partie évidée 1412 étant présente entre les deux surfaces d'appui 1410 et 1411 afin de faciliter le montage des secteurs d'anneau 10 entre les brides de la structure de support d'anneau 3.

Du côté aval, la structure de support d'anneau comprend une bride radiale aval annulaire 36 comportant sur sa face 36a en regard de la patte aval 16 des secteurs d'anneau 10 une pluralité de portions d'appui 38 réparties de manière circonférentielle sur la bride. Plus précisément, chaque portion d'appui 38 s'étend suivant la direction axiale DA en saillie depuis la face 36a de la bride radiale aval annulaire 36 en regard de la patte aval 16 des secteurs d'anneau 10. L'extrémité 161 de la patte aval 16 de chaque secteur d'anneau 10 est en contact à froid avec deux portions d'appui 38 de la bride radiale aval annulaire 36. Plus précisément, la surface supérieure de l'extrémité 161 dans la direction radiale DR est en contact à froid avec la surface inférieure des portions d'appui 38 dans la direction radiale DR réalisant ainsi une butée radiale entre l'extrémité 161 et les portions d'appui 38.

Dans l'exemple décrit ici, l'extrémité 161 de chaque patte 16 comporte une première et une deuxième surfaces d'appui 1610 et 1611 respectivement en contact avec deux portions d'appui 38. Une partie évidée 1612 étant présente entre les deux surfaces d'appui 1610 et 1611 afin de faciliter le montage des secteurs d'anneau 10 entre les brides 32 et 36 de la structure de support d'anneau 3.

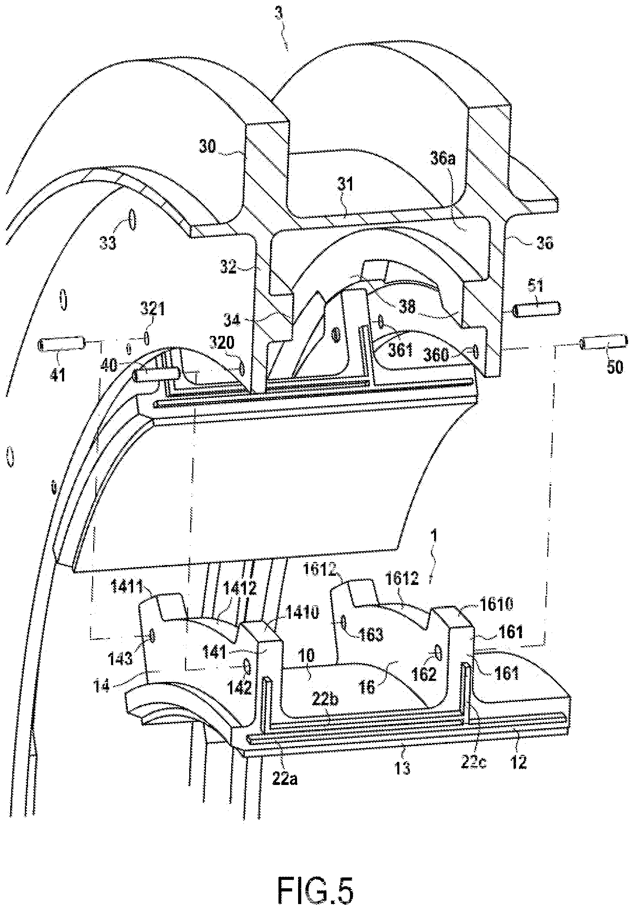

La patte amont 14 de chaque secteur d'anneau 10 comporte une première ouverture 142 dans laquelle est logée une partie d'un premier élément de maintien, ici un pion 40, solidaire de la bride radiale amont annulaire 32 et une deuxième ouverture 143 dans laquelle est logée une partie d'un deuxième élément de maintien, ici un pion 41, solidaire de la bride radiale amont annulaire 32. Les pions 40 et 41 sont montés respectivement dans des orifices 320 et 321 présents sur la bride radiale amont annulaire 32 (figure 5). Les pions 40 et 41 sont frettées dans les orifices 320 et 321 de la bride radiale amont annulaire 32 par des montages métalliques connus tels que des ajustements H6-P6 ou autres montages en force qui permettent la tenue de ces éléments à froid.

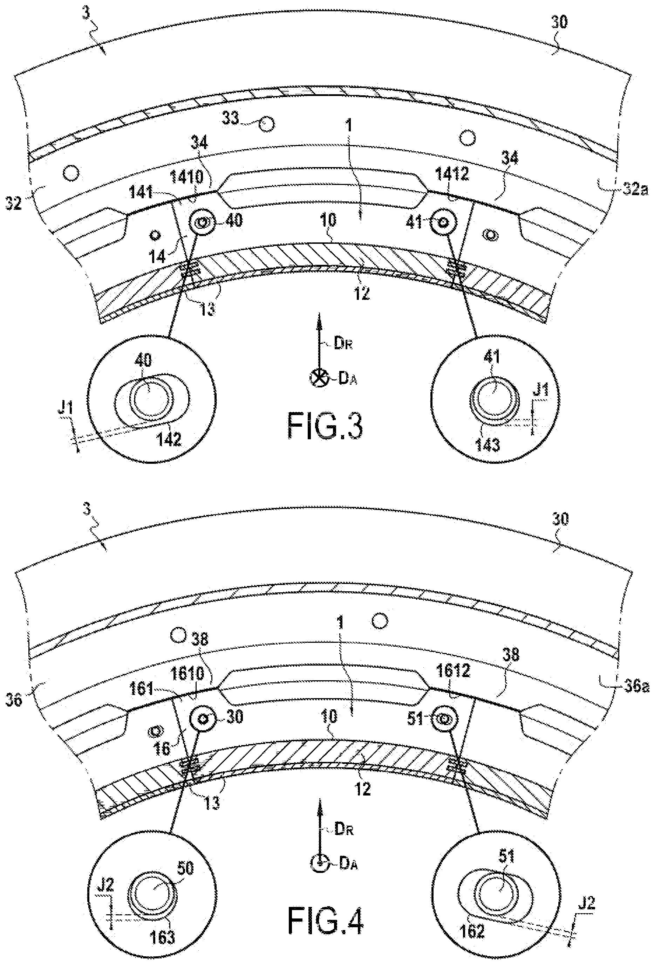

Un jeu radial J1 est présent à froid entre les première et deuxième ouvertures 142, 143 de la patte amont 14 et la partie des pions 40, 41 présente dans lesdites première et deuxième ouvertures, le jeu J1 étant présent dans la partie inférieure des ouvertures 142 et 143 suivant la direction radiale DR (figure 3). Les pions 40 et 41 sont en contact avec la partie supérieure respectivement des ouvertures 142 et 143 suivant la direction radiale DR, c'est-à-dire dans une zone radialement opposée à celle où le jeu J1 est présent. Il est ainsi possible de maintenir les secteurs d'anneau sans jeu au niveau de leur montage à froid sur la structure de support d'anneau tout en ménageant un jeu statique à froid entre les éléments de maintien solidaires des brides annulaires de la structure de support d'anneau et les ouvertures présentes dans les pattes des secteurs d'anneau au niveau de la partie des éléments de maintien opposée à celle en contact avec les ouvertures de manière à accommoder les dilatations différentielles des éléments de maintien par rapport aux secteurs d'anneau.

Dans le mode de réalisation décrit ici, la première ouverture 142 présente une forme oblongue s'étendant dans la direction circonférentielle de l'anneau de turbine tandis que la deuxième ouverture 143 présente une forme cylindrique.

Les pions 40 et 41 sont en un matériau ayant un coefficient de dilatation thermique supérieur au coefficient de dilatation thermique du matériau composite à matrice céramique des secteurs d'anneau. La dilatation des pions 40 et 41 respectivement dans les première et deuxième ouvertures 142 et 143 participe au maintien à chaud des secteurs d'anneau 10 sur la structure de support d'anneau 3, le jeu J1 étant réduit ou comblé par la dilatation des pions 40 et 41. Par « à chaud », on entend ici les températures auxquelles est soumis l'ensemble d'anneau lors du fonctionnement de la turbine, ces températures pouvant être comprises entre 600°C et 900°C.

La patte aval 16 de chaque secteur d'anneau 10 comporte une première ouverture 162 dans laquelle est logée une partie d'un troisième élément de maintien, ici un pion 50, solidaire de la bride radiale aval annulaire 36 et une deuxième ouverture 163 dans laquelle est logée une partie d'un quatrième élément de maintien, ici un pion 51, solidaire de la bride radiale aval annulaire 36. Les pions 50 et 51 sont montés respectivement dans des orifices 360 et 361 présents sur la bride radiale aval annulaire 36. Les pions 50 et 51 sont frettées dans les orifices 360 et 361 de la bride radiale aval annulaire 36 par des montages métalliques connus tels que des ajustements H6-P6 ou autres montages en force qui permettent la tenue de ces éléments à froid.

Un jeu radial J2 est présent à froid entre les première et deuxième ouvertures 162, 163 de la patte aval 16 et la partie des pions 50, 51 présente dans lesdites première et deuxième ouvertures, le jeu J2 étant présent dans la partie inférieure des ouvertures 162 et 163 suivant la direction radiale DR (figure 4). Les pions 50 et 51 sont en contact avec la partie supérieure respectivement des ouvertures 162 et 163 suivant la direction radiale DR, c'est-à-dire dans une zone radialement opposée à celle où le jeu J2 est présent. Il est ainsi possible de maintenir les secteurs d'anneau sans jeu au niveau de leur montage à froid sur la structure de support d'anneau tout en ménageant un jeu statique à froid entre les éléments de maintien solidaires des brides annulaires de la structure de support d'anneau et les ouvertures présentes dans les pattes des secteurs d'anneau au niveau de la partie des éléments de maintien opposée à celle en contact avec les ouvertures de manière à accommoder les dilatations différentielles des éléments de maintien par rapport aux secteurs d'anneau.

Dans le mode de réalisation décrit ici, la première ouverture 162 présente une forme oblongue s'étendant dans la direction circonférentielle de l'anneau de turbine tandis que la deuxième ouverture 163 présente une forme cylindrique.

Les pions 50 et 51 sont en un matériau ayant un coefficient de dilatation thermique supérieur au coefficient de dilatation thermique du matériau composite à matrice céramique des secteurs d'anneau. La dilatation des pions 50 et 51 respectivement dans les première et deuxième ouvertures 162 et 163 participe au maintien à chaud des secteurs d'anneau 10 sur la structure de support d'anneau 3, le jeu J2 étant réduit ou comblé par la dilatation des pions 50 et 51.

Les premières ouvertures de forme oblongue 142 et 162 présentes respectivement sur les pattes 14 et 16 sont alignées axialement par rapport à l'axe de l'anneau de turbine 1 qui est parallèle à la direction axiale DA. De même, les deuxièmes ouvertures 163 et 163 présentes respectivement sur les pattes 14 et 16 sont alignées axialement par rapport à l'axe de l'anneau de turbine 1.

En outre, l'étanchéité inter-secteurs est assurée par des languettes d'étanchéité logées dans des rainures se faisant face dans les bords en regard de deux secteurs d'anneau voisin. Une languette 22a s'étend sur presque toute la longueur de la base annulaire 12 dans la partie médiane de celle-ci. Une autre languette 22b s'étend le long de la patte 14 et sur une partie de la base annulaire 12. Une autre languette 22c s'étend le long de la patte 16. A une extrémité, la languette 22c vient en butée sur la languette 22a et sur la languette 22b. Les languettes 22a, 22b, 22c sont par exemple métalliques et sont montées avec jeu à froid dans leurs logements afin d'assurer la fonction d'étanchéité aux températures rencontrées en service.

De façon classique, des orifices de ventilation 33 formés dans la bride 32 permettent d'amener de l'air de refroidissement du côté extérieur de l'anneau de turbine 10.

On décrit maintenant un procédé de réalisation d'un ensemble d'anneau de turbine correspondant à celui représenté sur les figures 1 et 2.

Chaque secteur d'anneau 10 décrit ci-avant est réalisé en matériau composite à matrice céramique (CMC) par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique, par exemple des fils en fibres SiC tels que ceux commercialisés par la société japonaise Nippon Carbon sous la dénomination "Nicalon", ou des fils en fibres de carbone.

La préforme fibreuse est avantageusement réalisée par tissage tridimensionnel, ou tissage multicouches avec aménagement de zones de déliaison permettant d'écarter les parties de préformes correspondant aux pattes 14 et 16 des secteurs 10.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche peut être mise en forme pour obtenir une préforme de secteur d'anneau qui est consolidée et densifiée par une matrice céramique, la densification pouvant être réalisée notamment par infiltration chimique en phase gazeuse (CVI) qui est bien connue en soi.

Un exemple détaillé de fabrication de secteurs d'anneau en CMC est notamment décrit dans le document US 2012/0027572.

La structure de support d'anneau 3 est quant à elle réalisée en un matériau métallique tel qu'un alliage Waspaloy® ou inconel 718.

La réalisation de l'ensemble d'anneau de turbine se poursuit par le montage des secteurs d'anneau 10 sur la structure de support d'anneau 3. Comme illustré sur la figure 5, les pattes 14 et 16 de chaque secteur d'anneau 10 sont positionnées entre les brides radiales annulaires amont et aval 32 et 36 de manière à placer les deux surfaces d'appui 1410 et 1411 présentes sur l'extrémité de la patte 14 en contact avec les portions d'appui 34 de la bride radiale amont annulaire 32 et les deux surfaces d'appui 1610 et 1611 présentes sur l'extrémité de la patte 16 en contact avec les portions d'appui 38 de la bride radiale aval annulaire 36. Chaque secteur d'anneau 10 est également positionné de manière à aligner, d'une part, les ouvertures 142 et 143 de la patte 14 respectivement avec les orifices 320 et 321 de la bride radiale amont annulaire 32 et, d'autre part, les ouvertures 162 et 163 de la patte 16 respectivement avec les orifices 360 et 361 de la bride radiale aval annulaire 36. Les pions 40, 41, 50, 51 sont alors engagés respectivement dans les ouvertures et orifices ainsi alignés, les pions 40, 41, 50, 51 étant chacun frettés respectivement dans les orifices 320, 321, 360 et 361.

A froid, les secteurs d'anneaux 10 sont maintenus, d'une part, par les portions d'appui 34 et 38 des brides 32 et 36 de la structure de support d'anneau 3 qui sont en contact respectivement avec les extrémités 141 et 161 des pattes 14 et 16 et, d'autre part, par les pions 40, 41, 50, 51 chacun respectivement en contact avec la partie supérieure des orifices 320, 321, 360 et 361. Ces deux zones de contact (portions d'appui et pions) sur les secteurs d'anneau permettent de maintenir ces derniers à froid sur la structure de support d'anneau sans jeu de montage, c'est-à-dire sans possibilité pour les secteurs d'anneau d'avoir un déplacement relatif par rapport à la structure de support d'anneau.

A chaud, la dilatation des brides de la structure de support d'anneau ne permet plus d'assurer le maintien des secteurs d'anneau au niveau des portions d'appui 34 et 36. Le maintien à chaud est assuré à la fois par la dilatation des pions 40 et 41 dans les ouvertures 142 et 143 de la patte 14 qui réduit le jeu J1 et par la dilatation des pions 50 et 51 dans les ouvertures 162 et 163 de la patte 16 qui réduit le jeu J2.

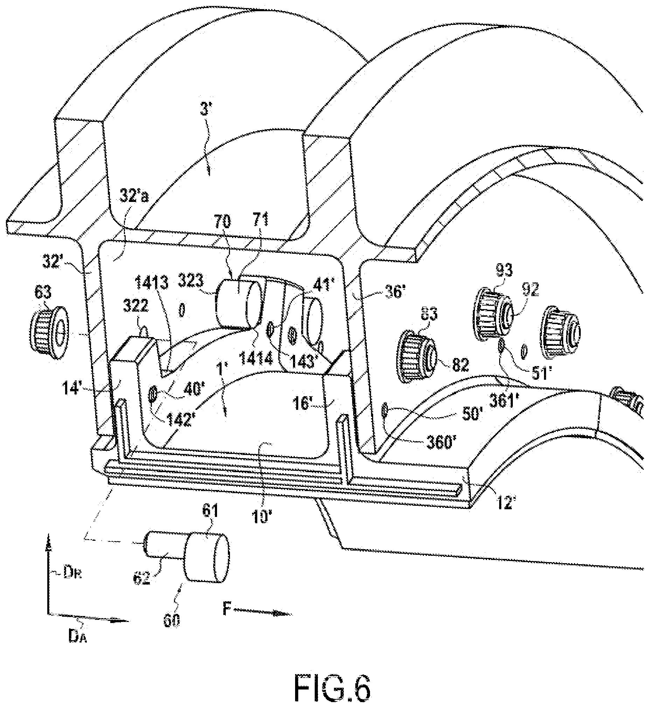

Les figures 6 à 9 montrent un autre mode de réalisation d'un ensemble d'anneau de turbine haute pression de l'invention qui diffère de celui décrit ci-avant en relation avec les figures 1 à 5 en ce que les portions d'appui fixes au niveau des brides de la structure de support d'anneau sont remplacées par des éléments de bridage à excentriques et en ce que les zones de contact entre les pattes des secteurs d'anneau et les brides de la structure de support d'anneau sont coplanaires, ces deux différences pouvant être implémentées de manière séparée ou combinée dans un même ensemble d'anneau de turbine, et ce en combinaison avec les modes de réalisation déjà décrits ci-avant.

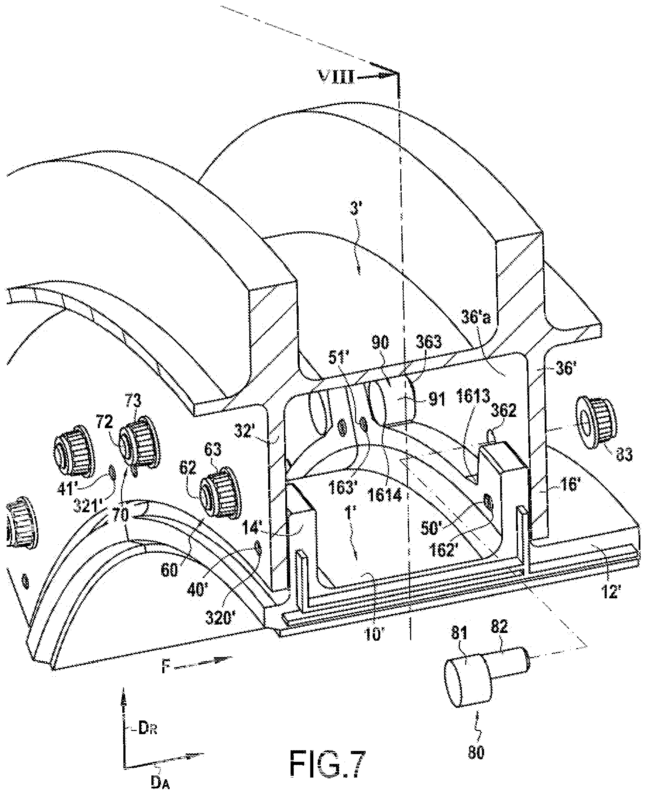

Plus précisément, comme illustrée sur les figures 6 et 7, la bride radiale amont annulaire 32' de la structure de support d'anneau 3' comprend sur sa face 32a' en regard de la patte amont 14' des secteurs d'anneau 10' une pluralité de brides 61 et 71 appartenant respectivement à des éléments de bridage à excentrique 60 et 70 et correspondant à des portions d'appui des brides sur les secteurs d'anneau. Chaque élément de bridage à excentrique 60, respectivement 70, comprend une tige filetée 62, respectivement 72, qui est placée dans un orifice 322, respectivement 323, présent sur la bride 32'. La bride 61, respectivement 71, ici sous forme d'un pion cylindrique, est fixée de façon excentrée sur la tige filetée 62, respectivement 72. La bride 61, respectivement 71, présente du côté de la face 32a' en regard de la patte amont 14', est maintenue dans une position déterminée par serrage d'un écrou 63, respectivement 73, sur la tige filetée 62, respectivement 72.

Des surfaces d'appui 1413 et 1414 présentes sur la patte amont 14' sont respectivement en contact à froid avec les deux brides 61 et 71 présentes sur la face 32a' de la bride 32' en regard de la patte amont 14' de chaque secteur d'anneau 10'. Plus précisément, chaque bride 61, 71 s'étend suivant la direction axiale DA en saillie depuis la face 32a' de la bride radiale amont annulaire 32' en regard de la patte amont 14' des secteurs d'anneau 10'. Les surfaces d'appui 1413 et 1414 sont en contact à froid avec la surface inférieure respectivement des brides 61 et 71 dans la direction radiale DR réalisant ainsi une butée radiale entre les surfaces d'appui 1413 et 1414 et les brides 61 et 71.

Du côté aval, la bride radiale aval annulaire 36' de la structure de support d'anneau 3' comprend sur sa face 36a' en regard de la patte aval 16' des secteurs d'anneau 10' une pluralité de brides 81 et 91 appartenant respectivement à des éléments de bridage à excentriques 80 et 90 et correspondant à des portions d'appui des brides sur les secteurs d'anneau. Chaque élément de bridage à excentrique 80, respectivement 90, comprend une tige filetée 82, respectivement 92, qui est placée dans un orifice 362, respectivement 363, présent sur la bride 36'. La bride 81, respectivement 91, ici sous forme d'un pion cylindrique, est fixée de façon excentrique sur la tige filetée 82, respectivement 92. La bride 81, respectivement 91, présente du côté de la face 36a' en regard de la patte aval 16', est maintenue dans une position déterminée par serrage d'un écrou 83, respectivement 93, sur la tige filetée 82, respectivement 92.

Des surfaces d'appui 1613 et 1614 présentes sur la patte aval 16' sont respectivement en contact à froid avec les deux brides 81 et 91 présentes sur la face 36a' de la bride 36' en regard de la patte aval 16' de chaque secteur d'anneau 10'. Plus précisément, chaque bride 81, 91 s'étend suivant la direction axiale DA en saillie depuis la face 36a' de la bride radiale aval annulaire 36' en regard de la patte aval 16' des secteurs d'anneau 10'. Les surfaces d'appui 1613 et 1614 sont en contact à froid avec la surface inférieure respectivement des brides 81 et 91 dans la direction radiale DR réalisant ainsi une butée radiale entre les surfaces d'appui 1613 et 1614 et les brides 81 et 91.

Grâce à l'utilisation des éléments de bridage à excentriques 60, 70, 80 et 90, il est possible de régler les appuis à froid entre les secteurs d'anneau et la structure de support d'anneau. Les éléments de bridage à excentrique peuvent avoir d'autres formes que celle décrite ci-avant. La bride de ces éléments peut être par exemple constituée d'un patin (pièce comportant un méplat) plutôt que d'un élément cylindrique.

De même que pour l'ensemble d'anneau de turbine haute pression décrit précédemment en relation avec les figures 1 à 5, la patte amont 14' de chaque secteur d'anneau 10' comporte une première ouverture 142' dans laquelle est logée une partie d'un premier élément de maintien, ici un pion 40', solidaire de la bride radiale amont annulaire 32' et une deuxième ouverture 143' dans laquelle est logée une partie d'un deuxième élément de maintien, ici un pion 41', solidaire de la bride radiale amont annulaire 32'. Les pions 40' et 41' sont montés respectivement dans des orifices 320' et 321' présents sur la bride radiale amont annulaire 32'.

Un jeu radial est présent à froid entre les première et deuxième ouvertures 142', 143' de la patte amont 14' et la partie des pions 40', 41' présente dans lesdites première et deuxième ouvertures, le jeu étant présent dans la partie inférieure des ouvertures 142' et 143' suivant la direction radiale DR (non représenté sur les figures 6 à 9). Les pions 40' et 41' sont en contact avec la partie supérieure respectivement des ouvertures 142' et 143' suivant la direction radiale DR, c'est-à-dire dans une zone radialement opposée à celle où le jeu est présent. Dans le mode de réalisation décrit ici, la première ouverture 142' présente une forme oblongue s'étendant dans la direction circonférentielle de l'anneau de turbine tandis que la deuxième ouverture 143' présente une forme cylindrique.

Les pions 40' et 41' sont en un matériau ayant un coefficient de dilatation thermique supérieur au coefficient de dilatation thermique du matériau composite à matrice céramique des secteurs d'anneau. La dilatation des pions 40' et 41' respectivement dans les première et deuxième ouvertures 142' et 143' participe au maintien à chaud des secteurs d'anneau 10' sur la structure de support d'anneau 3', le jeu étant réduit ou comblé par la dilatation des pions 40' et 41'.

La patte aval 16' de chaque secteur d'anneau 10' comporte une première ouverture 162' dans laquelle est logée une partie d'un troisième élément de maintien, ici un pion 50', solidaire de la bride radiale aval annulaire 36' et une deuxième ouverture 163' dans laquelle est logée une partie d'un quatrième élément de maintien, ici un pion 51', solidaire de la bride radiale aval annulaire 36'. Les pions 50' et 51' sont montés respectivement dans des orifices 360' et 361' présents sur la bride radiale aval annulaire 36'.

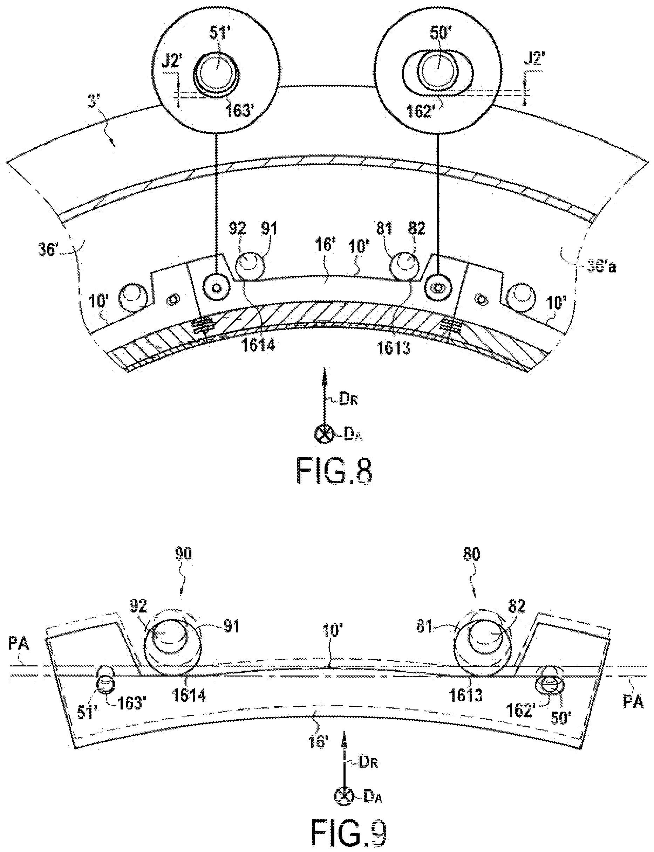

Un jeu radial J2' est présent à froid entre les première et deuxième ouvertures 162', 163' de la patte aval 16' et la partie des pions 50', 51' présente dans lesdites première et deuxième ouvertures, le jeu J2' étant présent dans la partie inférieure des ouvertures 162' et 163' suivant la direction radiale DR (figure 8). Les pions 50' et 51' sont en contact avec la partie supérieure respectivement des ouvertures 162' et 163' suivant la direction radiale DR, c'est-à-dire dans une zone radialement opposée à celle où le jeu est présent. Il est ainsi possible de maintenir les secteurs d'anneau sans jeu au niveau de leur montage à froid sur la structure de support d'anneau tout en ménageant un jeu statique à froid entre les éléments de maintien solidaires des brides annulaires de la structure de support d'anneau et les ouvertures présentes dans les pattes des secteurs d'anneau au niveau de la partie des éléments de maintien opposée à celle en contact avec les ouvertures de manière à accommoder les dilatations différentielles des éléments de maintien par rapport aux secteurs d'anneau.

Dans le mode de réalisation décrit ici, la première ouverture 162' présente une forme oblongue s'étendant dans la direction circonférentielle de l'anneau de turbine tandis que la deuxième ouverture 163' présente une forme cylindrique.

Les pions 50' et 51' sont en un matériau ayant un coefficient de dilatation thermique supérieur au coefficient de dilatation thermique du matériau composite à matrice céramique des secteurs d'anneau. La dilatation des pions 50' et 51' respectivement dans les première et deuxième ouvertures 162' et 163' participe au maintien à chaud des secteurs d'anneau 10' sur la structure de support d'anneau 3', le jeu J2' étant réduit ou comblé par la dilatation des pions 50' et 51'.

Comme illustré sur la figure 9, les deux surfaces d'appui 1613 et 1614 présentes sur la patte aval 16' s'étendent suivant un même premier plan d'appui PA. Le bord supérieur de la première ouverture de forme oblongue 162' présente sur la patte aval 16' est aligné avec le premier plan d'appui PA tandis que la partie supérieure de la deuxième ouverture 163' présente sur la patte aval 16' est tangente au premier plan d'appui PA. Ainsi, tous les zones ou points d'appui de la bride radiale aval annulaire 36' constitués par les brides 81 et 91, d'une part, et les pions 50' et 51', d'autre part, sur la patte aval 16' de chaque secteur d'anneau 10' sont alignés sur le même plan d'appui PA. Cet alignement des zones de contact sur un plan d'appui permet d'éviter tout mouvement relatif lié aux écarts de coefficient de dilatation thermique dans le sens radial et de conserver les mêmes zones de contact aussi bien à froid qu'à chaud (le positionnement à froid et à chaud des zones de contact entre les points d'appui de la bride radiale aval annulaire et la patte aval étant représenté respectivement en traits pleins et en traits hachurés sur la figure 9).

De même, les deux surfaces d'appui 1413 et 1414 présentes sur la patte amont 14' s'étendent suivant un même deuxième plan d'appui (non représenté sur les figures 6 à 9). Le bord supérieur de la première ouverture de forme oblongue 142' présente sur la patte amont 14' est aligné avec le deuxième plan d'appui tandis que la partie supérieure de la deuxième ouverture 143' présente sur la patte amont 14' est tangente au deuxième plan d'appui. Ainsi, toutes les zones ou points d'appui de la bride radiale amont annulaire 32' constitués par les brides 61 et 71, d'une part, et les pions 40' et 41', d'autre part, sur la patte amont 14' de chaque secteur d'anneau 10' sont alignés sur le même plan d'appui. Cet alignement des zones de contact sur un plan d'appui permet d'éviter tout mouvement relatif lié aux écarts de coefficient de dilatation thermique dans le sens radial et de conserver les mêmes zones de contact aussi bien à froid qu'à chaud.

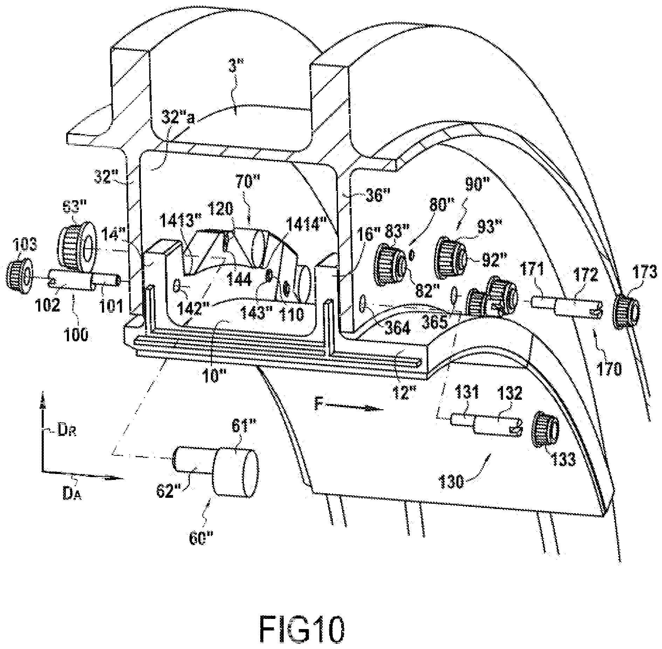

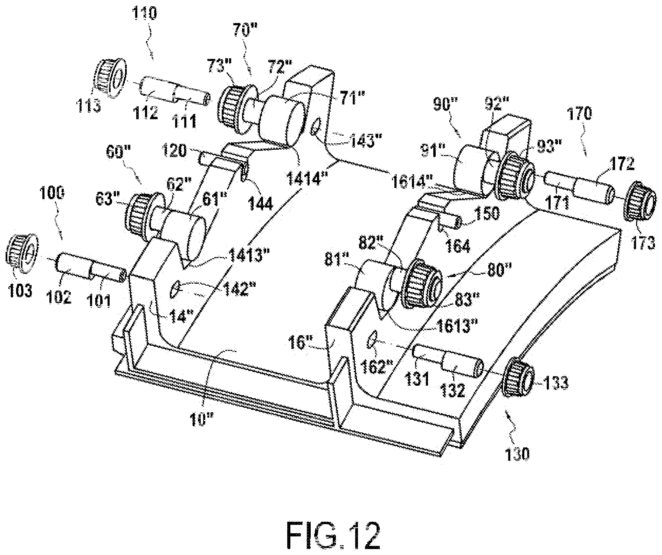

Les figures 10 à 14 montrent un autre mode de réalisation d'un ensemble d'anneau de turbine haute pression de l'invention qui diffère de celui décrit ci-avant en relation avec les figures 6 à 9 en ce que, d'une part, les ouvertures présentes dans chaque patte de secteur d'anneau et destinées à recevoir une partie d'un élément de maintien solidaire des brides annulaires de la structure de support d'anneau sont toutes de forme oblongue, chaque patte de secteur d'anneau comprenant en outre un logement pour un élément de centrage également solidaire des brides annulaires de la structure d'anneau et en ce que, d'autre part, les éléments de maintien dont une partie est destinée à être présente dans les ouvertures ménagées dans les pattes de chaque secteur d'anneau sont des éléments de bridage à excentrique. Ces deux différences pouvant être implémentées de manière séparée ou combinée dans un même ensemble d'anneau de turbine, et ce en combinaison avec les modes de réalisation déjà décrits ci-avant.

Plus précisément, la patte amont 14" de chaque secteur d'anneau 10" comporte une première ouverture 142" de forme oblongue dans laquelle est logée une partie d'un premier élément de maintien, ici un élément de bridage à excentrique 100, solidaire de la bride radiale amont annulaire 32" et une deuxième ouverture 143" également de forme oblongue dans laquelle est logée une partie d'un deuxième élément de maintien, ici un élément de bridage à excentrique 110, solidaire de la bride radiale amont annulaire 32". Chaque élément de bridage à excentrique 100, respectivement 110, comprend une tige filetée 102, respectivement 112, qui est placée dans un orifice 324, respectivement 325, présent sur la bride 32", l'orifice 324, respectivement 325, comportant un taraudage coopérant avec le filetage de la tige 102, respectivement de la tige 112. Une bride 101, respectivement 111, ici sous forme d'un pion cylindrique, est fixée de façon excentrée sur la tige filetée 102, respectivement 112. La bride 101, respectivement 111, présente dans la première ouverture 142", respectivement dans la deuxième ouverture 143", est placée dans une position déterminée par vissage de la tige filetée 102, respectivement 112, dans l'orifice 324, respectivement 325, et maintenue dans cette position par serrage d'un contre-écrou 103, respectivement 113, sur la tige filetée 102, respectivement 112.

Un jeu radial est présent à froid entre les première et deuxième ouvertures 142", 143" de la patte amont 14" et les brides 101, 111 présentes dans lesdites première et deuxième ouvertures (non représenté sur les figures 10 à 14). Les brides 101 et 111 sont en contact avec une partie respectivement des ouvertures 142" et 143" suivant la direction radiale DR, c'est-à-dire dans une zone où le jeu n'est pas présent. Il est ainsi possible de maintenir les secteurs d'anneau sans jeu au niveau de leur montage à froid sur la structure de support d'anneau tout en ménageant un jeu statique à froid entre les éléments de maintien solidaires des brides annulaires de la structure de support d'anneau et les ouvertures présentes dans les pattes des secteurs d'anneau.

Dans le mode de réalisation décrit ici, les première et deuxième ouvertures 142" et 143" présentent chacune une forme oblongue s'étendant dans la direction circonférentielle de l'anneau de turbine.

Les éléments de bridage à excentrique 100 et 110 sont en un matériau ayant un coefficient de dilatation thermique supérieur au coefficient de dilatation thermique du matériau composite à matrice céramique des secteurs d'anneau. La dilatation des brides 101 et 111 dans les première et deuxième ouvertures 142" et 143" participe au maintien à chaud des secteurs d'anneau 10" sur la structure de support d'anneau 3", le jeu étant réduit ou comblé par la dilatation des brides 101 et 111.

La patte amont 14" de chaque secteur d'anneau 10" comporte en outre un logement, ici une découpe 144, dans lequel est placé un élément de centrage, ici un pion 120, solidaire de la bride radiale amont annulaire 32".

La patte aval 16" de chaque secteur d'anneau 10" comporte une première ouverture 162" de forme oblongue dans laquelle est logée une partie d'un troisième élément de maintien, ici un élément de bridage à excentrique 130, solidaire de la bride radiale aval annulaire 34" et une deuxième ouverture 163" également de forme oblongue dans laquelle est logée une partie d'un quatrième élément de maintien, ici un élément de bridage à excentrique 170, solidaire de la bride radiale aval annulaire 34". Chaque élément de bridage à excentrique 130, respectivement 170, comprend une tige filetée 132, respectivement 172, qui est placée dans un orifice 364, respectivement 365, présent sur la bride 36", l'orifice 364, respectivement 365, comportant un taraudage coopérant avec le filetage de la tige 132, respectivement de la tige 172. Une bride 131, respectivement 171, ici sous forme d'un pion cylindrique, est fixée de façon excentrée sur la tige filetée 132, respectivement 172. La bride 131, respectivement 171, présente dans la première ouverture 162", respectivement dans la deuxième ouverture 163", est placée dans une position déterminée par vissage de la tige filetée 132, respectivement 172, dans l'orifice 364, respectivement 365, et maintenue dans cette position par serrage d'un contre-écrou 133, respectivement 173, sur la tige filetée 102, respectivement 112.

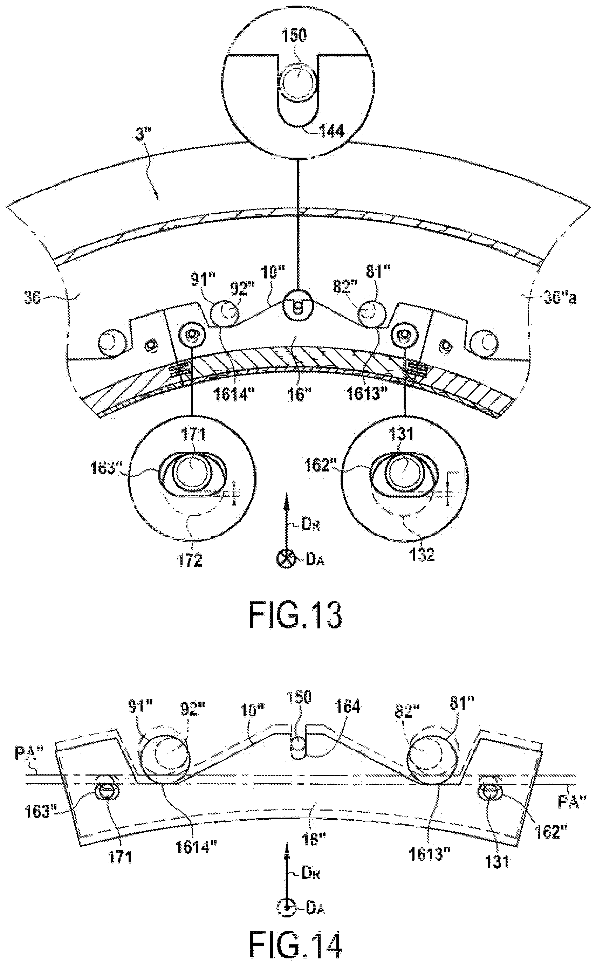

Un jeu radial J2" est présent à froid entre les première et deuxième ouvertures 162", 163" de la patte aval 16" et les brides 131, 171 présentes dans lesdites première et deuxième ouvertures (figure 13). Les brides 131 et 171 sont en contact avec une partie respectivement des ouvertures 162" et 163" dans une zone où le jeu n'est pas présent. Il est ainsi possible de maintenir les secteurs d'anneau sans jeu au niveau de leur montage à froid sur la structure de support d'anneau tout en ménageant un jeu statique à froid entre les éléments de maintien solidaires des brides annulaires de la structure de support d'anneau et les ouvertures présentes dans les pattes des secteurs d'anneau.

Dans le mode de réalisation décrit ici, les première et deuxième ouvertures 162" et 163" présentent chacune une forme oblongue s'étendant dans la direction circonférentielle de l'anneau de turbine. Les éléments de bridage à excentrique 130 et 170 sont en un matériau ayant un coefficient de dilatation thermique supérieur au coefficient de dilatation thermique du matériau composite à matrice céramique des secteurs d'anneau. La dilatation des brides 131 et 171 dans les première et deuxième ouvertures 162" et 163" participe au maintien à chaud des secteurs d'anneau 10" sur la structure de support d'anneau 3", le jeu J2" étant réduit ou comblé par la dilatation des brides 131 et 171.

La patte aval 16" de chaque secteur d'anneau 10" comporte en outre un logement, ici une découpe 164, dans lequel est placé un élément de centrage, ici un pion 150, solidaire de la bride radiale aval annulaire 36".

En utilisant deux ouvertures de forme oblongue dans chaque patte des secteurs d'anneau, on symétrise le déplacement relatif entre la structure de support d'anneau et les secteurs d'anneau. On conserve ainsi une bonne coïncidence entre l'axe médian de chaque secteur d'anneau et le rayon équivalent sur la structure de support d'anneau. L'élément de centrage permet d'éviter un décentrage des secteurs d'anneau lors des dilatations thermiques.

En outre, en utilisant des éléments de bridage à excentrique pour chaque élément de maintien, on augmente encore la capacité de réglage en hauteur radiale des secteurs d'anneau par rapport à la structure de support d'anneau et, par conséquent, le réglage du jeu entre les secteurs d'anneau.

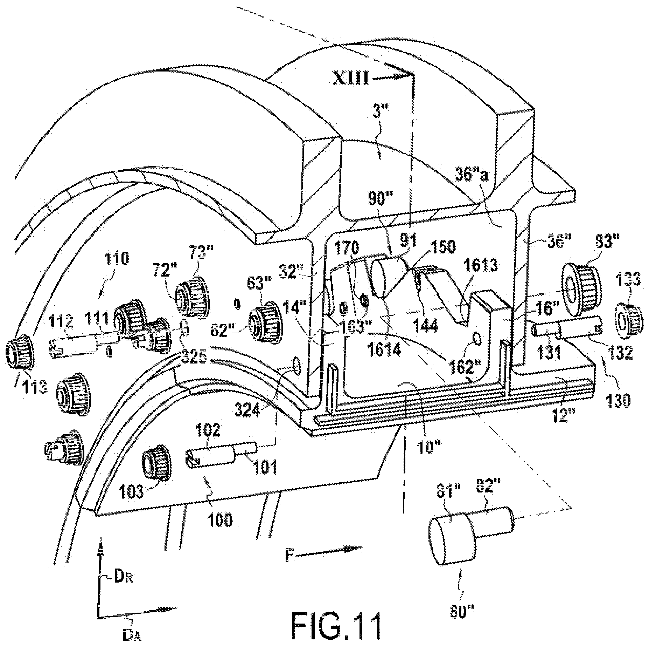

De même que pour l'ensemble d'anneau de turbine haute pression décrit précédemment en relation avec les figures 6 à 9 et comme illustrée sur les figures 10 et 11, la bride radiale amont annulaire 32" de la structure de support d'anneau 3" comprend sur sa face 32a" en regard de la patte amont 14" des secteurs d'anneau 10" une pluralité de brides 61" et 71" appartenant respectivement à des éléments de bridage à excentrique 60" et 70" et correspondant à des portions d'appui des brides sur les secteurs d'anneau. Chaque élément de bridage à excentrique 60", respectivement 70", comprend une tige filetée 62", respectivement 72", qui est placée dans un orifice 322", respectivement 323", présent sur la bride 32". Une bride 61", respectivement 71", ici sous forme d'un pion cylindrique, est fixée de façon excentrée sur la tige filetée 62", respectivement 72". La bride 61", respectivement 71", présente du côté de la face 32a" en regard de la patte amont 14", est maintenue dans une position déterminée par serrage d'un écrou 63", respectivement 73", sur la tige filetée 62", respectivement 72".

Des surfaces d'appui 1413" et 1414" présentes sur la patte amont 14" sont respectivement en contact à froid avec les deux brides 61" et 71" présentes sur la face 32a" de la bride 32" en regard de la patte amont 14" de chaque secteur d'anneau 10". Plus précisément, chaque bride 61", 71" s'étend suivant la direction axiale DA en saillie depuis la face 32a" de la bride radiale amont annulaire 32" en regard de la patte amont 14" des secteurs d'anneau 10". Les surfaces d'appui 1413" et 1414" sont en contact à froid avec la surface inférieure respectivement des brides 61" et 71" dans la direction radiale DR réalisant ainsi une butée radiale entre les surfaces d'appui 1413" et 1414" et les brides 61" et 71".

Du côté aval, la bride radiale aval annulaire 36" de la structure de support d'anneau 3" comprend sur sa face 36a" en regard de la patte aval 16" des secteurs d'anneau 10" une pluralité de brides 81" et 91" appartenant respectivement à des éléments de bridage à excentriques 80" et 90" et correspondant à des portions d'appui des brides sur les secteurs d'anneau. Chaque élément de bridage à excentrique 80", respectivement 90", comprend une tige filetée 82", respectivement 92", qui est placée dans un orifice 362", respectivement 363", présent sur la bride 36". Une bride 81", respectivement 91", ici sous forme d'un pion cylindrique, est fixée de façon excentrique sur la tige filetée 82", respectivement 92". La bride 81", respectivement 91", présente du côté de la face 36a" en regard de la patte aval 16", est maintenue dans une position déterminée par serrage d'un écrou 83", respectivement 93", sur la tige filetée 82", respectivement 92".

Des surfaces d'appui 1613" et 1614" présentes sur la patte aval 16" sont respectivement en contact à froid avec les deux brides 81" et 91" présentes sur la face 36a" de la bride 36" en regard de la patte aval 16" de chaque secteur d'anneau 10". Plus précisément, chaque bride 81", 91" s'étend suivant la direction axiale DA en saillie depuis la face 36a" de la bride radiale aval annulaire 36" en regard de la patte aval 16" des secteurs d'anneau 10". Les surfaces d'appui 1613" et 1614" sont en contact à froid avec la surface inférieure respectivement des brides 81" et 91" dans la direction radiale DR réalisant ainsi une butée radiale entre les surfaces d'appui 1613" et 1614" et les brides 81" et 91".

Grâce à l'utilisation des éléments de bridage à excentriques 60", 70", 80", 90", 100, 110, 130 et 140, il est possible de régler les appuis à froid entre les secteurs d'anneau et la structure de support d'anneau.

Comme illustré sur la figure 14, les deux surfaces d'appui 1613" et 1614" présentes sur la patte aval 16" s'étendent suivant un même premier plan d'appui PA". Le bord supérieur de la première ouverture de forme oblongue 162" présente sur la patte aval 16" est aligné avec le premier plan d'appui PA" tandis que la partie supérieure de la deuxième ouverture 163" présente sur la patte aval 16" est tangente au premier plan d'appui PA". Ainsi, tous les zones ou points d'appui de la bride radiale aval annulaire 36" constitués par les brides 81" et 91", d'une part, et les brides 101 et 111, d'autre part, sur la patte aval 16" de chaque secteur d'anneau 10" sont alignés sur le même plan d'appui PA. Cet alignement des zones de contact sur un plan d'appui permet d'éviter tout mouvement relatif lié aux écarts de coefficient de dilatation thermique dans le sens radial et de conserver les mêmes zones de contact aussi bien à froid qu'à chaud (le positionnement à froid et à chaud des zones de contact entre les points d'appui de la bride radiale aval annulaire et la patte aval étant représenté respectivement en traits pleins et en traits hachurés sur la figure 9).

De même, les deux surfaces d'appui 1413" et 1414" présentes sur la patte amont 14" s'étendent suivant un même deuxième plan d'appui (non représenté sur les figures 10 à 14). Le bord supérieur de la première ouverture de forme oblongue 142" présente sur la patte amont 14" est aligné avec le deuxième plan d'appui tandis que la partie supérieure de la deuxième ouverture 143" présente sur la patte amont 14" est tangente au deuxième plan d'appui. Ainsi, tous les zones ou points d'appui de la bride radiale amont annulaire 32" constitués par les brides 61" et 71", d'une part, et les brides 131 et 171, d'autre part, sur la patte amont 14" de chaque secteur d'anneau 10" sont alignés sur le même plan d'appui. Cet alignement des zones de contact sur un plan d'appui permet d'éviter tout mouvement relatif lié aux écarts de coefficient de dilatation thermique dans le sens radial et de conserver les mêmes zones de contact aussi bien à froid qu'à chaud.

Les éléments de maintien et les portions d'appui pour chaque secteur d'anneau peuvent être placés de manière alignée suivant la direction radiale comme pour le mode de réalisation des figures 1 à 4. Les éléments de maintien peuvent être également placés à l'extérieur des portions d'appui dans la direction circonférentielle de chaque secteur d'anneau comme dans les modes de réalisation des figures 6 à 14. Enfin, les éléments de maintien peuvent être aussi placés à l'intérieur des portions d'appui dans la direction circonférentielle pour chaque secteur d'anneau.

## Revendications

1. Ensemble d'anneau de turbine comprenant une pluralité de secteurs d'anneau (10) en matériau composite à matrice céramique formant un anneau de turbine (1) et une structure de support d'anneau (3) comportant une première et une deuxième brides annulaires (32, 36), chaque secteur d'anneau ayant une partie formant base annulaire (12) avec, dans une direction radiale (DA) de l'anneau de turbine, une face interne définissant la face interne de l'anneau de turbine et une face externe à partir de laquelle s'étendent une première et une deuxième pattes (14, 16), les pattes de chaque secteur d'anneau étant maintenues entre les deux brides annulaires (32, 36) de la structure de support d'anneau (3),
tel que la première patte (14) de chaque secteur d'anneau (10) comporte une première ouverture (142) dans laquelle est logée une partie d'un premier élément de maintien solidaire de la première bride annulaire (32) et une deuxième ouverture (143) dans laquelle est logée une partie d'un deuxième élément de maintien solidaire de la première bride annulaire, un jeu radial (J1) étant présent à froid entre les la partie des premier et deuxième éléments de maintien présente dans lesdites première et deuxième ouvertures, lesdits éléments de maintien étant en un matériau ayant un coefficient de dilatation thermique supérieur au coefficient de dilatation thermique du matériau composite à matrice céramique des secteurs d'anneau, la première ouverture présentant une forme oblongue s'étendant dans la direction circonférentielle de l'anneau de turbine,
tel que la deuxième patte (16) de chaque secteur d'anneau (10) comporte une première ouverture (162) dans laquelle est logée une partie d'un troisième élément de maintien solidaire de la deuxième bride annulaire (36) et une deuxième ouverture (163) dans laquelle est logée une partie d'un quatrième élément de maintien solidaire de la deuxième bride annulaire, un jeu radial (32) étant présent à froid entre les première et deuxième ouvertures (162, 163) de la deuxième pattte (16) et la partie des troisième et quatrième éléments de maintien présente dans lesdites première et deuxième ouvertures, lesdits éléments de maintien étant en un matériau ayant un coefficient de dilatation thermique supérieur au coefficient de dilatation thermique du matériau composite à matrice céramique des secteurs d'anneau, la première ouverture présentant une forme oblongue s'étendant dans la direction circonférentielle de l'anneau de turbine, les première et deuxième ouvertures de la première patte étant alignées axialement avec les première et deuxième ouvertures de la deuxième patte,
tel que la première bride annulaire (32) comprend sur se face (32a) en regard de la première patte (14) de chaque secteur d'anneau (10) une pluralité de portions d'appui (34) réparties de manière circonférentielle sur la première bride, l'extrémité (141) de la première patte (14) de chaque secteur d'anneau étant à froid en butée radiale avec deux portions d'appui (34),
tel que la deuxième bride annulaire (36) comprend sur sa face (36a) en regard de la deuxième patte (16) de chaque secteur d'anneau (10) une pluralité de portions d'appui (38) réparties de manière circonférentielle sur la deuxième bride, l'extrémité (161) de la deuxième patte (16) de chaque secteur d'anneau étant à froid en butée radiale avec deux portions d'appui (38).

2. Ensemble selon la revendication 1, dans lequel les premier et deuxième éléments de maintien sont formés respectivement par des premier et deuxième pions (40, 41) solidaires de la première bride annulaire (32) et en ce que les troisième et quatrième éléments de maintien sont formés respectivement par des troisième et quatrième pions (50, 51) solidaires de la deuxième bride annulaire (36).

3. Ensemble selon la revendication 1 ou 2, dans lequel les portions d'appui (34, 38) présentes sur les première et deuxième brides annulaires (32, 36) sont espacées les unes des autres par une portion évidée s'étendant dans une direction circonférentielle.

4. Ensemble selon l'une quelconque des revendications 1 à 3, comprenant une pluralité d'éléments de bridage réglables à excentrique (60, 70, 80, 90), chaque élément de bridage comprenant une bride (61 ; 71 ; 81 ; 91) fixée de manière excentrée sur l'élément de bridage, chaque bride formant une portion d'appui présente sur les première et deuxième brides annulaires (32, 36).

5. Ensemble selon l'une quelconque des revendications 1 à 4, dans lequel la première patte (14') de chaque secteur d'anneau (10') comprend deux surfaces d'appui (1413, 1414) en contact respectivement avec deux portions d'appui de la première bride annulaire (32'), les deux surfaces d'appui s'étendant suivant un même premier plan d'appui, le bord supérieur de la première ouverture de forme oblongue (142') étant aligné avec le premier plan d'appui, la partie supérieure de la deuxième ouverture (143') étant tangente audit premier pian d'appui, et dans lequel la deuxième patte (16') de chaque secteur d'anneau comprend deux surfaces d'appui (1613, 1614) en contact respectivement avec deux portions d'appui de la deuxième bride annulaire (36'), les deux surfaces d'appui s'étendant suivant un même deuxième plan d'appui (PA), le bord supérieur de la première ouverture de forme oblongue (162') étant aligné avec le deuxième pian d'appui, la partie supérieure de la deuxième ouverture (163') étant tangente audit deuxième plan d'appui.

6. Ensemble selon l'une quelconque des revendications 1 à 5, dans lequel la deuxième ouverture (143") de la première patte (14") de chaque secteur d'anneau (10") présente une forme oblongue, le bord supérieur de la deuxième ouverture de forme oblongue étant aligné avec ie premier plan d'appui, et dans lequel la deuxième ouverture (163") de la deuxième patte (16) de chaque secteur d'anneau présente une forme oblongue, le bord supérieur de la deuxième ouverture (163") de forme oblongue étant aligné avec le deuxième plan d'appui (PA), l'extrémité de la première patte (14") de chaque secteur d'anneau (10") comprenant un évidement (144) situé entre les deux surfaces d'appui (1413", 1414") et dans lequel est logé un élément de centrage (120) solidaire de la première bride annulaire (32"), l'extrémité de la deuxième patte (16") de chaque secteur d'anneau comprenant un évidement (164) situé entre les deux surfaces d'appui (1613", 1614") et dans lequel est logé un élément de centrage (150) solidaire de la deuxième bride annulaire (36").

7. Ensemble selon l'une quelconque des revendications 1 et 3 à 6. dans lequel les premier et deuxième éléments de maintien solidaires de la première bride radiale et les premier et deuxième élément de maintien solidaires de la deuxième bride radiale sont chacun formé par un élément de bridage réglable à excentrique (100 ; 110 ; 130 ; 170).

## Patentansprüche

1. Turbinenringanordnung, umfassend eine Vielzahl von Ringsektoren (10) aus Keramikmatrix-Verbundwerkstoff, die einen Turbinenring (1) bilden, sowie eine Ringtragstruktur (3) mit einem ersten und einem zweiten ringförmigen Flansch (32, 36), wobei jeder Ringsektor einen eine ringförmige Basis bildenden Teil (12) mit - in einer radialen Richtung (DA) des Turbinenrings - einer Innenseite, welche die Innenseite des Turbinenrings definiert, und einer Außenseite, von der aus sich eine erste und eine zweite Lasche (14, 16) erstrecken, aufweist, wobei die Laschen eines jeden Ringsektors zwischen den beiden ringförmigen Flanschen (32, 36) der Ringtragstruktur (3) gehalten sind,
derart, dass die erste Lasche (14) eines jeden Ringsektors (10) eine erste Öffnung (142), in der ein Teil eines ersten Halteelements, das mit dem ersten ringförmigen Flansch (32) fest verbunden ist, aufgenommen ist, und eine zweite Öffnung (143) aufweist, in der ein Teil eines zweiten Halteelements, das mit dem ersten ringförmigen Flansch fest verbunden ist, aufgenommen ist, wobei in kaltem Zustand ein radiales Spiel (J1) zwischen der ersten und der zweiten Öffnung (142, 143) der ersten Lasche (14) und dem in der ersten und der zweiten Öffnung vorhandenen Teil des ersten und des zweiten Halteelements vorhanden ist, wobei die Halteelemente aus einem Material bestehen, dessen Wärmeausdehnungskoeffizient größer ist als der Wärmeausdehnungskoeffizient des Keramikmatrix-Verbundwerkstoffs der Ringsektoren, wobei die erste Öffnung eine längliche Form aufweist, die sich in der Umfangsrichtung des Turbinenrings erstreckt,
derart, dass die zweite Lasche (16) eines jeden Ringsektors (10) eine erste Öffnung (162), in der ein Teil eines dritten Halteelements, das mit dem zweiten ringförmigen Flansch (36) fest verbunden ist, aufgenommen ist, und eine zweite Öffnung (163) aufweist, in der ein Teil eines vierten Halteelements, das mit dem zweiten ringförmigen Flansch fest verbunden ist, aufgenommen ist, wobei in kaltem Zustand ein radiales Spiel (J2) zwischen der ersten und der zweiten Öffnung (162, 163) der zweiten Lasche (16) und dem in der ersten und der zweiten Öffnung vorhandenen Teil des dritten und des vierten Halteelements vorhanden ist, wobei die Halteelemente aus einem Material bestehen, dessen Wärmeausdehnungskoeffizient größer ist als der Wärmeausdehnungskoeffizient des Keramikmatrix-Verbundwerkstoffs der Ringsektoren, wobei die erste Öffnung eine längliche Form aufweist, die sich in der Umfangsrichtung des Turbinenrings erstreckt, wobei die erste und die zweite Öffnung der ersten Lasche mit der ersten und der zweiten Öffnung der zweiten Lasche axial fluchten,
derart, dass der erste ringförmige Flansch (32) auf seiner der ersten Lasche (14) eines jeden Ringsektors (10) gegenüberliegenden Seite (32a) eine Vielzahl von Anlageabschnitten (34) aufweist, die über den ersten Flansch umfangsmäßig verteilt sind, wobei das Ende (141) der ersten Lasche (14) eines jeden Ringsektors in kaltem Zustand mit zwei Anlageabschnitten (34) in radialem Anschlag ist,
derart, dass der zweite ringförmige Flansch (36) auf seiner der zweiten Lasche (16) eines jeden Ringsektors (10) gegenüberliegenden Seite (36a) eine Vielzahl von Anlageabschnitten (38) aufweist, die über den zweiten Flansch umfangsmäßig verteilt sind, wobei das Ende (161) der zweiten Lasche (16) eines jeden Ringsektors in kaltem Zustand mit zwei Anlageabschnitten (38) in radialem Anschlag ist.

2. Anordnung nach Anspruch 1, bei der das erste und das zweite Halteelement durch einen ersten bzw. einen zweiten Stift (40, 41), die mit dem ersten ringförmigen Flansch (32) fest verbunden sind, gebildet sind, und dass das dritte und das vierte Halteelement durch einen dritten bzw. einen vierten Stift (50, 51), die mit dem zweiten ringförmigen Flansch (36) fest verbunden sind, gebildet sind.

3. Anordnung nach Anspruch 1 oder 2, bei der die Anlageabschnitte (34, 38), die an dem ersten und dem zweiten ringförmigen Flansch (32, 36) vorhanden sind, durch einen ausgesparten Abschnitt, der sich in einer Umfangsrichtung erstreckt, voneinander beabstandet sind.

4. Anordnung nach einem der Ansprüche 1 bis 3, umfassend eine Vielzahl von einstellbaren Exzenterspannelementen (60, 70, 80, 90), wobei jedes Spannelement einen Flansch (61; 71; 81; 91) umfasst, der an dem Spannelement exzentrisch befestigt ist, wobei jeder Flansch einen an dem ersten und dem zweiten ringförmigen Flansch (32, 36) vorhandenen Anlageabschnitt bildet.

5. Anordnung nach einem der Ansprüche 1 bis 4, bei der die erste Lasche (14') eines jedes Ringsektors (10') zwei Anlageflächen (1413, 1414) aufweist, die jeweils mit zwei Anlageabschnitten des ersten ringförmigen Flansches (32') in Kontakt stehen, wobei sich die beiden Anlageflächen in einer gleichen ersten Anlageebene erstrecken, wobei die Oberkante der ersten Öffnung (142') mit länglicher Form mit der ersten Anlageebene fluchtet, wobei der obere Teil der zweiten Öffnung (143') zu der ersten Anlageebene tangential ist, und wobei die zweite Lasche (16') eines jeden Ringsektors zwei Anlageflächen (1613, 1614) aufweist, die jeweils mit zwei Anlageabschnitten des zweiten ringförmigen Flansches (36') in Kontakt sind, wobei sich die beiden Anlageflächen in einer gleichen zweiten Anlageebene (PA) erstrecken, wobei die Oberkante der ersten Öffnung (162') mit länglicher Form mit der zweiten Anlageebene fluchtet, wobei der obere Teil der zweiten Öffnung (163') zu der zweiten Anlageebene tangential ist.

6. Anordnung nach einem der Ansprüche 1 bis 5, bei der die zweite Öffnung (143") der ersten Lasche (14") eines jeden Ringsektors (10") eine längliche Form aufweist, wobei die Oberkante der zweiten Öffnung mit länglicher Form mit der ersten Anlageebene fluchtet, und wobei die zweite Öffnung (163") der zweiten Lasche (16) eines jeden Ringsektors eine längliche Form aufweist, wobei die Oberkante der zweiten Öffnung (163") mit länglicher Form mit der zweiten Anlageebene (PA) fluchtet, wobei das Ende der ersten Lasche (14") eines jeden Ringsektors (10") eine Ausnehmung(144) aufweist, die zwischen den beiden Anlageflächen (1413", 1414") gelegen ist und in der ein mit dem ersten ringförmigen Flansch (32") fest verbundenes Zentrierelement (120) aufgenommen ist, wobei das Ende der zweiten Lasche (16") eines jeden Ringsektors eine Ausnehmung (164) aufweist, die zwischen den beiden Anlageflächen (1613", 1614") gelegen ist und in der ein mit dem zweiten ringförmigen Flansch (36") fest verbundenes Zentrierelement (150) aufgenommen ist.

7. Anordnung nach einem der Ansprüche 1 und 3 bis 6, bei der das erste und das zweite Halteelement, die mit dem ersten radialen Flansch fest verbunden sind, und das erste und das zweite Halteelement, die mit dem zweiten radialen Flansch fest verbunden sind, jeweils durch ein einstellbares Exzenterspannelement (100; 110; 130; 170) gebildet sind.

## Claims

1. A turbine ring assembly comprising both a plurality of ring sectors (10) made of ceramic matrix composite material to form a turbine ring (1), and also a ring support structure (3) having first and second annular flanges (32, 36), each ring sector having a portion forming an annular base (12) with, in a radial direction (DA) of the turbine ring, an inner face defining the inside face of the turbine ring and an outer face from which there extend first and second tabs (14, 16), the tabs of each ring sector being held between the two annular flanges (32, 36) of the ring support structure (3) ;
wherein the first tab (14) of each ring sector (10) includes a first opening (142) receiving a portion of a first holder element secured to the first annular flange (32) and a second opening (143) receiving a portion of a second holder element secured to the first annular flange, radial clearance (J1) being present when cold between the first and second openings (142, 143) in the first tab (14) and the portions of the first and second holder elements present in said first and second openings, said holder elements being made of a material having a coefficient of thermal expansion that is greater than the coefficient of thermal expansion of the ceramic matrix composite material of the ring sectors, the first opening presenting a shape that is oblong extending in the circumferential direction of the turbine ring;
wherein the second tab (16) of each ring sector (10) includes a first opening (162) receiving a portion of a third holder element secured to the second annular flange (36) and a second opening (163) receiving a portion of a fourth holder element secured to the second annular flange, radial clearance (J2) being present when cold between the first and second openings (162, 163) in the second tab (16) and the portions of the third and fourth holder elements present in said first and second openings, said holder elements being made of a material having a coefficient of thermal expansion that is greater than the coefficient of thermal expansion of the ceramic matrix composite material of the ring sectors, the first opening presenting a shape that is oblong extending in the circumferential direction of the turbine ring, the first and second openings of the first tab being in axial alignment with the first and second openings of the second tab;
wherein the first annular flange (32) includes on its face (32a) facing the first tab (14) of each ring sector (10) a plurality of thrust portions (34) distributed circumferentially over the first flange, the end (141) of the first tab (14) of each ring sector when cold being in radial abutment against two thrust portions (34); and
wherein the second annular flange (36) includes on its face (36a) facing the second tab (16) of each ring sector (10) a plurality of thrust portions (38) distributed in circumferential manner over the second flange, the end (161) of each second tab (16) of each ring sector when cold being in radial abutment against two thrust portions (38).

2. An assembly according to claim 1, wherein the first and second holder elements are formed respectively by first and second pegs (40, 41) secured to the first annular flange (32) and in that the third and fourth holder elements are formed respectively by third and fourth pegs (50, 51) secured to the second annular flange (36) .

3. An assembly according to claim 1 or claim 2, wherein the thrust portions (34, 38) present on the first and second annular flanges (32, 36) are spaced apart from each other by a recessed portion extending in a circumferential direction.

4. An assembly according to any one of claims 1 to 3, having a plurality of adjustable eccentric clamping elements (60, 70, 80, 90), each clamping element having a clamp (61; 71; 81; 91) fastened eccentrically on the clamping element, each clamp forming a thrust portion present on the first and second annular flanges (32, 36).

5. An assembly according to any one of claims 1 to 4, wherein the first tab (14') of each ring sector (10') has two thrust surfaces (1413, 1414) in contact respectively with two thrust portions of the first annular flange (32'), the two thrust surfaces extending in a common first thrust plane, the top edge of the first opening (142') of oblong shape being in alignment with the first thrust plane, the top portion of the second opening (143') being tangential with said first thrust plane, and wherein the second tab (16') of each ring sector has two thrust surfaces (1613, 1614) in contact respectively with two thrust portions of the second annular flange (36'), the two thrust surfaces extending in a common second thrust plane (PA), the top edge of the first opening (162') of oblong shape being in alignment with the second thrust plane, the top portion of the second opening (163') being tangential with said second thrust plane.

6. An assembly according to any one of claims 1 to 5, wherein the second opening (143") of the first tab (14") of each ring sector (10") presents an oblong shape, the top edge of the second opening of oblong shape being in alignment with the first thrust plane, and wherein the second opening (163") of the second tab (16) of each ring sector presents an oblong shape, the top edge of the second opening (163") of oblong shape being in alignment with the second thrust plane (PA), the end of the first tab (14") of each ring sector (10") including a recess (144) situated between the two thrust surfaces (1413", 1414") and receiving a centering element (120) secured to the first annular flange (32"), the end of the second tab (16") of each ring sector including a recess (164) situated between the two thrust surfaces (1613", 1614") and receiving a centering element (150) secured to the second annular flange (36").

7. An assembly according to any one of claims 1 and 3 to 6, wherein the first and second holder elements secured to the first radial flange and the first and second holder elements secured to the second radial flange are each formed by an adjustable eccentric clamping element (100; 110; 130; 170).
